# EUROPEAN PATENT SPECIFICATION

(11) **EP 3 552 680 B1**
(45) Date of publication and mention of the grant of the patent: **13.04.2022**
(21) Application number: 17878460.9
(22) Date of filing: 08.12.2017
(51) Int. Cl.: C02F 1/469, B01D 35/06, B01D 39/20, B01D 35/16, B01D 61/14, C02F 1/44, B01D 35/30, C02F 1/28, B01J 20/20, B01J 20/28, C02F 9/00, C02F 1/461, C02F 101/20

(54) **WATER TREATMENT APPARATUS COMPRISING A FILTER MODULE**
WASSERBEHANDLUNGSVORRICHTUNG MIT EINEM FILTERMODUL
APPAREIL DE TRAITEMENT D'EAU COMPRENANT UN MODULE DE FILTRE

(30) Priority: 09.12.2016 KR 20160167765
(43) Date of publication of application: 16.10.2019
(73) Proprietor: LG Electronics Inc., Seoul 07336 (KR)
(72) Inventor: CHOI, Yuseung, Seoul 08592 (KR); LEE, Sangduck, Seoul 08592 (KR); CHO, Suchang, Seoul 08592 (KR)
(74) Representative: Ter Meer Steinmeister & Partner
(86) International application number: PCT/KR2017/014390
(87) International publication number: WO 2018/106061

(56) References cited:
- EP-A2- 2 098 485
- WO-A1-01/09907
- WO-A2-2012/161534
- KR-A- 20120 032 100
- KR-A- 20150 059 202
- KR-B1- 100 953 085
- KR-B1- 101 110 709
- US-A1- 2013 277 222
- US-A1- 2015 299 002
- US-A1- 2015 299 002

## Description

### [Technical Field]

The present invention relates to a filter module for a water treatment apparatus and a water treatment apparatus including the same.

### [Background Art]

In general, a water treatment apparatus, such as a water purifier, that processes raw water to generate purified water has been disclosed in various forms. However, recently, deionization manners, such as electro-deionization (EDI), continuous electro deionization (CEDI), or capacitive deionization (CDI), have been spotlighted among manners applied to water treatment apparatuses. Among them, recently, the CDI water treatment system is the most popular.

The CDI manner is to remove underwater ions (contaminants) through the principle of adsorbing ions on the surface of the electrode through electric force.

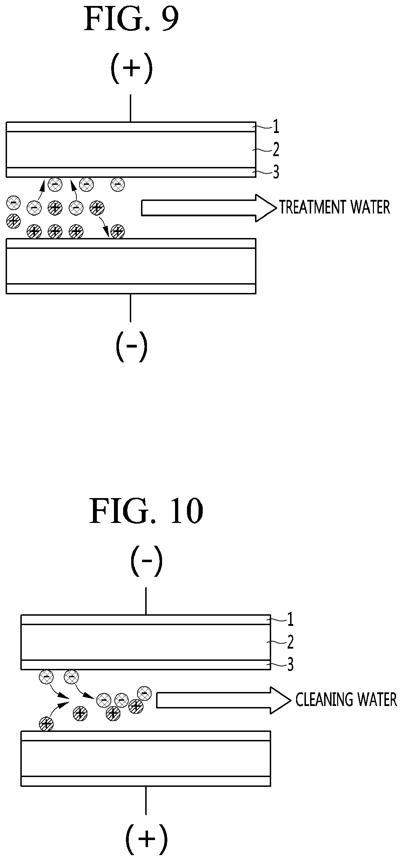

The details hereof will be described below with reference to FIG. 9, when treatment water is allowed to pass between electrodes (positive and negative electrodes) in the state that a voltage is applied to the electrodes, a negative ion moves to the positive electrode and a positive ion moves to the negative electrode. In other words, adsorption occurs. Ions in the treatment water may be removed through such adsorption.

However, such adsorption continues, and the electrode becomes no longer able to adsorb ions. When a situation reaches this, the electrode is regenerated by separating the ions, which are adsorbed on the electrode, from the electrode as illustrated in FIG. 10. In this case, the washing water including the ions separated from the electrode is discharged to the outside. Such regeneration may be achieved as no voltage is applied to the electrode or a voltage is applied in opposition to the case of adsorbing the ions.

In order to commercially use such a CDI manner, a large number of electrodes (positive and negative electrodes) are generally stacked. However, according to the CDI manner, the deionization performance is affected by the spacing between the electrodes. In other words, in the CDI manner, as the spacing between the electrodes is increased, the deionization performance is lowered. The reasons are as follows. First, as the spacing between the electrodes is increased, the capacitance of a capacitor is decreased. In general, the capacitance of the capacitor is inversely proportional to the spacing between the electrodes. Second, as the spacing between the electrodes is increased, the treatment water more rapidly flows between the electrodes. When the treatment water rapidly flows between electrodes, it is difficult for the ions in the treatment water to be adsorbed on the electrodes. Even if a large number of electrodes are stacked, it is significantly important to properly maintain the spacing between the electrodes.

However, according to the conventional CDI manner as illustrated in FIGS.9 and 10, when an ion exchange membrane 3 is used in addition to the use of a current collector 1 having the plate shape and a carbon electrode 2, the whole thickness of the electrode is increased, but the specific surface area and the permeability are lowered. In other words, according to the conventional CDI manner, it is difficult to minimize the volume of the electrode and to expect high-efficiency ion removal performance.

US 2015/299002 A1 presents an activated carbon filter (ACF) system. The ACF system includes a plurality of activated carbon electrodes, at least one current spreader for each of the plurality of activated carbon electrodes, an electrical connection to provide electrical power to the plurality of activated carbon electrodes via the at least one current spreader, an inlet and an outlet configured to provide fluid through a flow path in the plurality of activated carbon electrodes to remove contaminant from the fluid. The system actively deionizes and removes chemical, biological, and/or other particles from a fluid (e.g., tap water).

WO 01/09907 A1 presents a flow-through capacitor and method for the purification of fluids, like soft water.

EP 2 098 485 A2 presents an electrode module capable of improving productivity by integrally bonding a current collector and a pair of electrodes using a protective film. The electrode module includes a current collector to receive power from an external power supply, and a pair of electrodes to receive power from the current collector, in which the current collector and electrodes are integrally bonded by thermocompression using a protective film. The electrode module further comprises a conductive binder formed between the current collector and the electrodes in each electrode module.

WO 2012/161534 A2 provides an apparatus and method for controlling total dissolved solids, and water treatment apparatus including apparatus for controlling total dissolved solids. The total dissolved solid controlling apparatus includes, a filtering unit including a deionizing filter removing dissolved solids from inflow raw water by an input current and, a control unit controlling the input current such that water discharged from the deionizing filter corresponds to target total dissolved solids.

US 2013/277222 A1 provides a water treatment apparatus having a filter unit that includes a first electrochemical filter and a second electrochemical filter for filtering raw water. A control unit drives the first electrochemical filter and the second electrochemical filter. The first electrochemical filter and the second electrochemical filter are installed in parallel. The control unit controls the second electrochemical filter to perform a water purifying operation when the first electrochemical filter needs to be recycled.

KR 2012 0032100 A provides a capacitive deionization-based water treatment apparatus using a carbon electrode to improve the operational efficiency of the apparatus by forming the apparatus based on a small area-based absorption electrode. The carbon absorption electrode is an electrode containing active carbon and a polymer binder, a woven sheet based on active carbon fiber, a non-woven sheet based on active carbon fiber, an active carbon powder based sheet-shaped electrode, or a conductive carbon absorption electrode. A capacitive deionization-based water treatment apparatus is composed of a reactor, a pair of collectors, a pair of absorption electrodes, a rectifier, and a voltage applying line.

### [Disclosure]

### [Technical Problem]

The present invention suggests a filter module for a water treatment apparatus, in which high-efficiency ion removal performance may be obtained by increasing the specific surface area and the permeability, and a water treatment apparatus including the same, to solve the above problem.

The present invention suggests a filter module for a water treatment apparatus, capable of minimizing the thickness of an electrode by removing the ion exchange membrane and minimizing the volume of the current collector, and a water treatment apparatus including the same.

The present invention suggests a filter module for a water treatment apparatus, in which stacking is freely performed, so a stacking height may be variously set depending on a required treatment capacity and a required treatment speed, and a water treatment apparatus including the same.

The present invention suggests a filter module for a water treatment apparatus, which may be manufactured in the form of the curved surface as well as the flat surface, and a water treatment apparatus including the same.

The present invention suggests a filter module for a water treatment apparatus, capable of uniformly maintaining the ion removal capability of an activated carbon fiber filter by easily removing ions adsorbed onto the activated carbon fiber layer, and a water treatment apparatus including the same.

The present invention suggests a filter module for a water treatment apparatus, which is directly applicable to an existing water treatment apparatus without changing the shape or the arrangement structure of the filter applied to the water treatment apparatus, and a water treatment apparatus including the same.

The present invention suggests a filter module for a water treatment apparatus, in which a heterogeneous filter is provided in one housing in a longitudinal direction to reduce the volume of the filter, thereby increasing the space utilization, and a water treatment apparatus including the same.

### [Technical Solution]

One or more objects of the present technique are achieved by subject-matter of the independent claim.

According to the present invention, a water purifier filter includes a filter housing including an inlet and an outlet, and a filter module provided in the filter housing to purify water introduced through the inlet and to supply the water to the outlet. A material of the filter module may include sodium orthotitanate (Na4TiO4) to remove a heavy metal under water. Accordingly, under water heavy metal including cadmium may be effectively removed.

In addition, the material of the filter module may further include a synthetic iron hydroxide (a-FeOOH) compound. According to the present invention, a filter module for a water treatment apparatus includes at least one filter. The filter is an activated carbon fiber filter including one activated carbon fiber filter unit or including a plurality of activated carbon fiber filter units which are stacked and each of the activated carbon fiber filters includes a plurality of activated carbon fiber layers including activated carbon fiber and stacked in parallel to each other, a plurality of spacers interposed between the activated carbon fiber layers to prevent short, a pair of current collectors disposed on opposite sides of the stack of activated carbon fiber layers, respectively, and wherein one of the current collectors is connected to one end portion of an activated carbon fiber layer of the stack of activated carbon fiber layers and another of the current collectors is connected to an opposite end portion of an adjacent activated carbon fiber layer of the stack of activated carbon fiber layers such that adjacent activated carbon fiber layers alternately form positive and negative electrodes, respectively; and a power supply unit to apply, through a current collector, a current to the activated carbon fiber layer forming the positive electrode and the negative electrode. Accordingly, water hardness may be lowered. In addition, high-efficiency ion removal performance may be obtained by increasing the specific surface area and the permeability. In addition, the volume of the current collector may be minimized by removing the ion exchange membrane, thereby minimizing the thickness of the electrode. In addition, the stacking may be freely performed, so the stacking height may be variously set depending on the required treatment capacity and the required treatment speed.

In addition, the activated carbon fiber layer is provided in a form of a fabric having flexibility. Accordingly, the filter may be manufactured in the form of a curved surface as well as the flat surface, the application range of the filter may be enlarged.

In addition, the power supply unit may apply the current in one direction when treatment water is supplied to the activated carbon fiber filter and allows the ion to be adsorbed on the activated carbon fiber layer to remove the underwater ion. In addition, the power supply unit may apply a current in an opposite direction to the one direction, when the treatment water is supplied to the activated carbon fiber filter, and the ion, which is adsorbed on the activated carbon fiber layer, is discharged under water to clean the activated carbon fiber layer. Accordingly, the ion removal capability of the activated carbon filter may be uniformly maintained by easily removing the ions adsorbed on the activated carbon fiber layer.

In addition, the filter module includes a plurality of activated carbon fiber filters. According to the present invention, the foreign matters may be more removed from the raw water through several stages, and the hardness of the water may be more lowered.

In addition, the filter module further includes a pre-carbon block filter which purifies water introduced from an outside and then supplies the water to the activated carbon fiber filter. Accordingly, particulate matters and organic compounds contained in the raw water may be more reliably removed.

In addition, the filter of the present invention further includes a post-carbon block filter which receives, purifies, and then discharges water output through the activated carbon fiber filter. Accordingly, the foreign matters may more reliably removed and the water taste may be improved.

In addition, the filter module further includes a UF membrane filter which receives, purifies, and then discharges water output through the activated carbon fiber filter. According to the present invention, viruses and bacteria under the water may be more reliably removed.

In addition, the water output through the activated carbon fiber filter sequentially passes through the UF membrane filter and the post carbon block filter, and the UF membrane filter and the post-carbon block filter are provided in a longitudinal direction and provided inside one filter housing. Accordingly, the present invention is directly applicable to the existing water treatment apparatus without changing the shape or the arrangement structure of the filter applied to the water treatment apparatus. In addition, the heterogeneous filters are arranged in the longitudinal direction in one filter housing, thereby reducing the volume of the filter and increasing the space utilization. Further, the slim water treatment apparatus may be realized.

The water treatment apparatus of the present invention is defined in the appended claims.

### [Advantageous Effects]

According to the present invention, the water may be softened by lowering water hardness.

According to an embodiment, high-efficiency ion removal performance may be expected by increasing the specific surface area and the permeability.

According to the present invention, the volume of the current collector may be minimized by removing the ion exchange membrane, thereby minimizing the thickness of the electrode.

According to the present invention, the stacking is freely performed, so the stacking height may be variously set depending on the required treatment capacity and the required treatment speed.

According to the present invention, the filter may be manufactured in the form of a curved shape as well as a flat surface, so the application range of the filter may be enlarged.

According to the present invention, the ion removal capability of the activated carbon fiber filter may be uniformly maintained by easily removing the ions adsorbed to the activated carbon fiber layer.

According to the present invention, foreign matters may be more removed as the raw water passes through several stages, and the hardness of the water may be more lowered.

According to the present invention, particulate matter and organic compounds contained in the raw water may be more reliably removed.

According to the present invention, the foreign matters may be more reliably removed and the water taste may be improved.

According to the present invention, viruses and bacteria under the water may be more reliably removed.

The present invention is directly applicable to the existing water treatment apparatus without changing the shape or the arrangement structure of the filter applied to the water treatment apparatus.

In addition, according to the present invention, a heterogeneous filter is provided in one housing in a longitudinal direction to reduce the volume of the filter, thereby increasing the space utilization and realizing the slim water treatment apparatus. Further, various effects may be understood as being produced through the features suggested in the detailed embodiments of the present invention.

### [Description of Drawings]

FIG. 1 is a perspective view illustrating a water treatment apparatus according to the present invention.
FIG. 2 is a view illustrating the piping feature of the water treatment apparatus illustrated in FIG. 1.
FIG. 3 is a schematic view illustrating some components of an activated carbon fiber filter for the water treatment apparatus according to the present invention.
FIG. 4 is a schematic view illustrating that water is purified through an activated carbon fiber filter illustrated in FIG. 3.
FIG. 5 is a schematic view illustrating that the activated carbon fiber filter illustrated in FIG. 3 is cleaned.
FIG. 6 is a schematic view illustrating a filter module of the water treatment apparatus.
FIG. 7 is a schematic view illustrating a filter module of the water treatment apparatus according to the present invention.
FIG. 8 is a photography having an enlarged activated carbon fiber layer which is some components of the activated carbon fiber filter illustrated in FIG. 3.
FIG. 9 is a schematic view illustrating the state that water is purified in a conventional CDI manner.
FIG. 10 is a schematic view illustrating the state that an electrode is regenerated in a conventional CDI manner.

### [Best Mode]

### [Mode for Invention]

Hereinafter, the detailed embodiment of the present invention will be described with reference to accompanying drawings. The present invention is specifically defined in the appended claims.

In the accompanying drawing for the following embodiments, fine parts may be expressed mutually differently according to drawings. In addition, a specified part may not be expressed or exaggeratedly expressed depending on drawings.

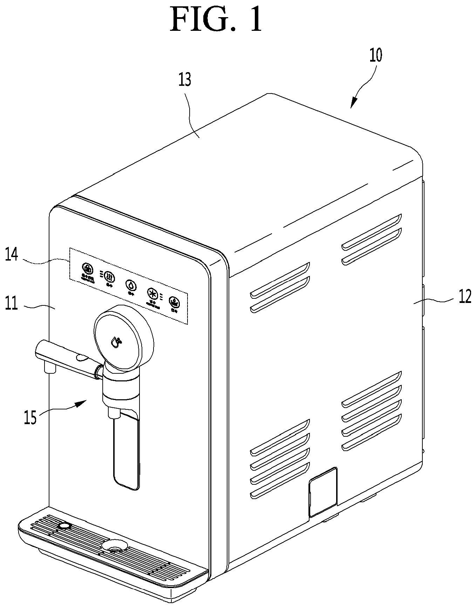

FIG. 1 is a perspective view illustrating a water treatment apparatus according to the present invention.

The water treatment apparatus may include various purification apparatuses such as a water purifier, a water softener, and the like. In addition, the water treatment apparatus may correspond to a purifying unit installed in a washing machine, a dishwasher, a refrigerator, or the like.

Although the following description will be made regarding a water purifier for a water treatment apparatus by way of example, the scope of the present invention is not limited thereto, and the water treatment apparatus may have various embodiments within the scope of the invention as defined in the appended claims.

Referring to FIG. 1, a water treatment apparatus may include a purifier by way of example.

The water purifier is to purify the water directly supplied from an external water source, and then to cool, heat, and extract the water. For example, the water purifier may be a direct water type water purifier. In this case, the direct water type water purifier refers to a water purifier having the structure in which the purified water is extracted without a water tank for storing the purified water when the user extracts the water.

In addition, a water purifier 10 may have an outer appearance formed by combining a plurality of panels with each other. In more detail, the water purifier 10 may have a substantially hexahedral shape as a front panel 11 forming a front outer appearance, side panels 12 forming outer appearances of opposite side surfaces, a top surface panel 13 forming a top surface outer appearance, and a base panel forming a bottom surface outer appearance are combined with each other. In addition, a plurality of parts for purifying water are provided in an internal space formed by combining the panels.

In addition, the front panel 11 is provided thereon with an operation display unit 14 to allow a user to input an operation command of the water purifier 10 and to display the operation state of the water purifier 10.

The operation display unit 14 is provided in the form of a plurality of buttons or a touch screen such that light is irradiated to each button. In other words, when the user presses or touches the button of the operation display unit 14, the selected button is irradiated with light to allow the user to easily recognize whether the button is selected, and to simultaneously perform the function of the display unit.

The operation display unit 14 includes a button to select the kind of water to be extracted, that is, a button to select cold water, hot water or purified water (water at the room temperature), a button to continuously dispense water, a button to identify a power state of the hot water, and a display unit to display the temperatures of the hot water or the cold water.

In addition, the operation display unit 14 may further include a button to perform an additional function, and some buttons may be omitted from the operation display unit 14.

A water chute 15, which is operable by the user to dispense purified water, is provided below the operation display unit 14. The water chute 15 is provided so that the user may operate the water chute 15 to dispense the purified water. The water chute 15 has a function of opening and closing a water outlet to allow the user to extract the purified water, so the water chute 15 is referred to as an opening/closing device or an opening/closing nozzle.

The water chute 15 is configured to dispense purified water, cold water, or hot water depending on the functions of the water purifier 10 by the operation of the user. In addition, a tray is provided below the water chute 15, in detail, at a front lower end portion of the front panel 11 to receive water dropped from the water chute 15.

The tray is provided in the shape of a hexahedron having an internal space and provided on the top surface thereof with a grill-shaped cover to filter out foreign matters. The tray is movable forward from the front panel 11. Such movement of the tray allows the user to put purified water even in a bottle having a higher height or a container having a wider bottom surface.

In addition, the tray further includes a buoy for checking the level of water contained in the internal space thereof. The user may recognize the timing to empty water from the tray by recognizing such a buoy, thereby improving the convenience of user.

Although not illustrated, a plurality of components including a refrigerant cycle to cool water, a cold water generating unit to generate cold water, and a hot water generating unit to heat water are received inside the panels forming the outer appearance of the water purifier 10.

In detail, the water purifier 10 may include a compressor to compress the refrigerant into a gas-phase refrigerant having a high temperature and high pressure, a condenser to condense the refrigerant discharged from the compressor to a liquid-phase refrigerant having the high temperature and high pressure, and a condensing fan to exchange heat with the condenser.

In addition, the water purifier 10 may further include a filter assembly to filter out foreign matters contained in water supplied from the water supply source. The filter assembly may include a carbon filter.

The water purifier 10 may further include an expansion valve to expand the refrigerant discharged from the condenser to a two-phase refrigerant having a low temperature and low pressure and an evaporator through which the two-phase refrigerant having the low temperature and low pressure, which is subject to the expansion valve, flows.

In addition, the water purifier 10 may further include a cold water generating unit including the evaporator and a cold water pipe through which the cold water flows.

Further, the water purifier 10 may further include a hot-water heater to heat the water to be supplied to a set temperature.

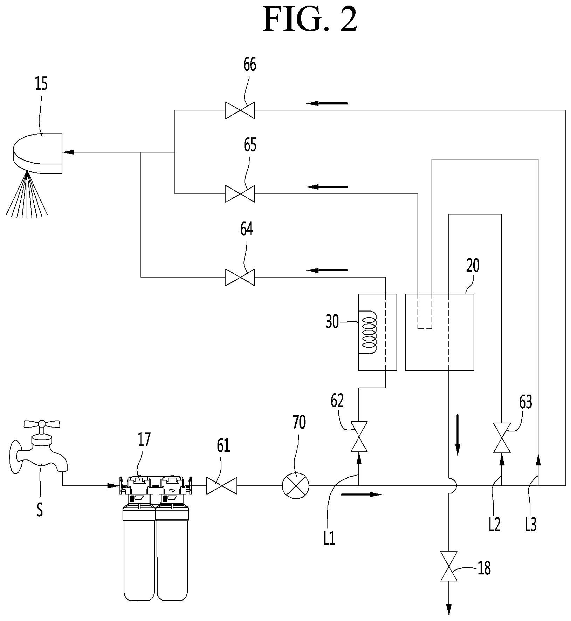

FIG. 2 is a view illustrating the piping feature of the water treatment apparatus illustrated in FIG. 1.

Referring to FIG. 2, a water supply line L may extend from a water supply source S to the water chute 15 of the water purifier 10, and various valves and purified water parts may be connected to the water supply line L.

In more detail, the water supply line L is connected to the water supply source S, for example, a faucet at home, and a filter assembly 17 is disposed at a certain point in the water supply line L to filter out foreign matters from drinking water supplied from the water supply source S.

In addition, a water supply valve 61 and a flow sensor 70 are sequentially arranged on the water supply line L connected to an outlet end of to the filter assembly 17. Therefore, when a supply amount sensed by the flow sensor 70 reaches a set amount, the water supply valve 61 may be controlled to be closed.

In addition, a hot water supply line L1, a cold water supply line L3, and a cooling water supply line L2 may branch from a certain point of the water supply line L extending from the outlet end of the flow sensor 70.

In addition, a purified water dispensing valve 66 is mounted at an end portion of the water supply line L extending from the outlet end of the flow sensor 70, and a hot water dispensing valve 64 is mounted at an end portion of the hot water supply line L1. In addition, a cold water dispensing valve 65 may be mounted at an end portion of the cold water supply line L3, and a cooling water valve 63 may be mounted at a certain point of the cooling water supply line L2. The cooling water valve 63 may adjust an amount of cooling water supplied to a cold water generating unit 20.

In addition, all water supply lines extending from the outlet ends of the hot water dispensing valve 64, the cold water dispensing valve 65, and the purified water dispensing valve 66 are connected to the water chute 15. In addition, as illustrated in drawings, the purified water, the cold water, and the hot water may be configured to be connected to a single outlet, and may be configured to be connected to independent outlets, respectively, according to occasions.

Hereinafter, the processes of supplying the cold water and hot water will be described.

First, in the case of cold water, when the cooling water valve 63 is open and cooling water is supplied to the cold water generating unit 20, the water of the cold water supply line L3 passing through the cold water generating unit 20 is cooled by the cooling water, so the cold water is generated.

In this case, the cooling water supply line L2 may have a refrigerant cycle to cool the cooling water. The refrigerant cycle may include a compressor, a condenser, an expansion valve, an evaporator, and the like.

Thereafter, when the button to select cold water in the operation display unit is pressed and the cold water dispensing valve 65 is open, the cold water may be dispensed through the water chute 15.

Meanwhile, in the case of hot water, water flowing through the hot water supply line L1 is heated by the hot water heater 30 to generate the hot water. When the button to select hot water in the operation display unit is pressed and the hot water dispensing valve 64 is open, the hot water may be dispensed through the water chute 15.

The water treatment apparatus according to the present invention including the purifier having the above components includes a filter module including at least one filter to generate purified water from the raw water. The filter module will be described later.

Hereinafter, the filter module for the water treatment apparatus according to an embodiment of the present invention will be described.

The filter module for the water treatment apparatus according to the present invention includes a first and a second activated carbon fiber filter.

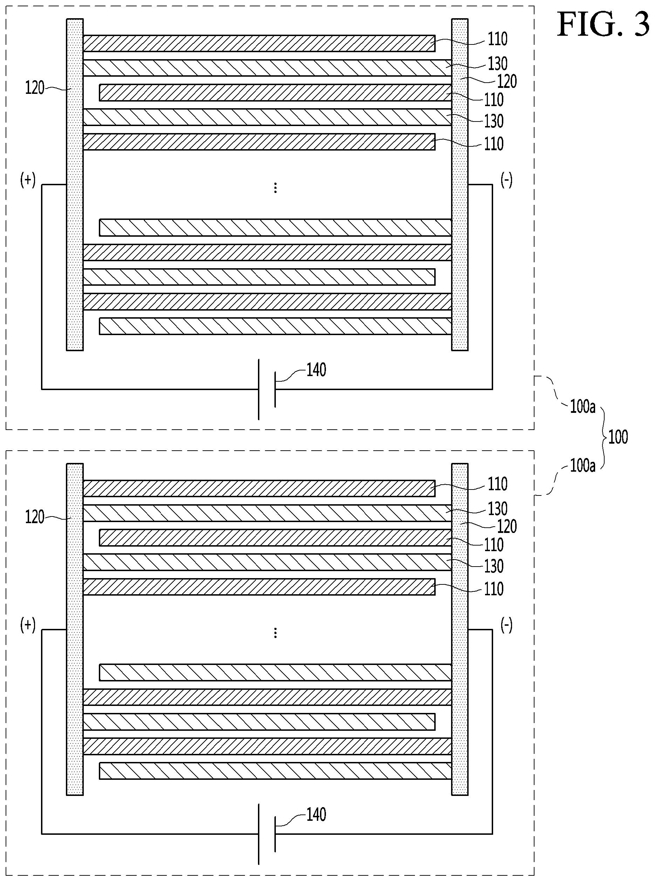

FIG. 3 is a schematic view illustrating an activated carbon fiber filter which is some component of the filter module for the water treatment apparatus according to the present invention.

Referring to FIG. 3, the activated carbon fiber filter 100 includes at least one activated carbon fiber filter unit 100a stacked.

In other words, the activated carbon fiber filter 100 may include one activated carbon fiber filter unit 100a or may be formed by stacking a plurality of activated carbon fiber filter units 100a.

The activated carbon fiber filter unit 100a includes a plurality of activated carbon fiber layers 110 including activated carbon fiber and stacked in parallel to each other, a plurality of spacers 130 interposed between the activated carbon fiber layers to prevent short, a pair of current collectors 120 connected with one end portion or an opposite end portion of the activated carbon fiber layers 110 stacked, and power supply units 140 and 150 to apply a current to the activated carbon fiber layer 110 through the current collector 120 such that adjacent activated carbon fiber layers 110 alternately form a positive electrode and a negative electrode.

First, the activated carbon fiber layer 110 includes an activated carbon fiber. The activated carbon fiber (ACF) may refer to that activated carbon is processed in the fiber to improve the adsorption performance of the activated carbon.

In the conventional activated carbon, a material to be adsorbed are diffused into a hole referred to as a macropore formed in the surface of the activated carbon and finally adsorbed to an internal mesopore or a micropore.

To the contrary, in the case of the activated carbon fiber, mesopores or micropores are formed in the surface instead of macropores. Accordingly, the material to be adsorbed is directly adsorbed on the mesopore or the micropore without the diffusion.

Accordingly, when the activated carbon fiber is used, the material to be adsorbed may be adsorbed at a rapid speed.

In addition, in the case of the activated carbon fiber, the surface area becomes wider than that of the existing activated carbon. Accordingly, an adsorption amount of adsorbed material and the removal speed of the adsorbed material may be increased.

In the present embodiment, the activated carbon fiber layer 110 may be processed in various forms. For example, the activated carbon fiber layer 110 may have the form of a fabric having flexibility.

When the activated carbon fiber layer 110 is formed in the form of a fabric having flexibility, the activated carbon fiber filter 100 may be provided in the form of a curved surface as well as a flat surface. Accordingly, the application range of the filter may be enlarged.

For example, since the shape of the activated carbon fiber filter 100 is freely changed, the activated carbon fiber filter 100 may be installed at a position in which the installation space of the filter is not ensured.

The number of activated carbon fiber layers 110 may be adjusted depending on the desired adjustment degree of hardness. For example 20 to 40 activated carbon fiber layers 110 may be stacked in one activated carbon fiber filter unit 100a.

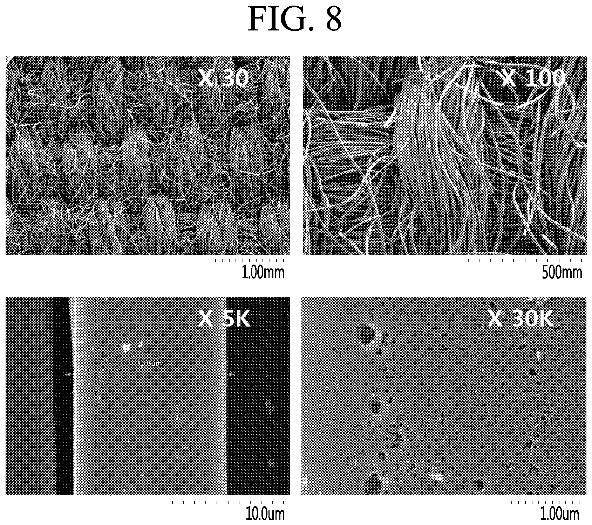

FIG. 8 is a photography having an enlarged activated carbon fiber layer which is some components of the activated carbon fiber filter illustrated in FIG. 3.

Referring to FIG. 8, it may be recognized that the activated carbon fibers are woven in the form of a fabric. When the activated carbon fibers are woven in the form of a fabric, permeability may be ensured.

In addition, referring to the enlarged photograph of FIG. 8, it may be recognized that a mesopore or a micropore is formed in the surface of the activated carbon fiber.

As a result, the activated carbon fiber layer 110 has an activated carbon fiber woven in the form of a fabric, so the higher permeability is ensured. Accordingly, the activated carbon fiber layer 110 may allow raw water to pass therethrough rapidly. In addition, the activated carbon fiber layer may have a wider surface area, and may rapdily adsorb and remove the material to be adsorbed, which is contained in the raw water passing through mesopores or micropores formed in the surface of the activated carbon fiber.

The spacers 130 are disposed between the activated carbon fiber layers 110. The spacers 130 form a gap between the activated carbon fiber layers 110 to prevent short between the activated carbon fiber layers 110. Also, the raw water may be purified while passing between the activated carbon fiber layers 110 through the spacer 130.

Accordingly, the spacer 130 may be formed of a water-permeable material, while being an insulator. For example, the spacer 130 may be formed of a nylon material.

A pair of current collectors 120 is provided, connected with one end portion or an opposite end portion of the activated carbon fiber layers 110, which are stacked, and provided in the form of an electric conductor. For example, the current collector 120 may be formed by applying activated carbon on opposite surfaces of a graphite foil.

The details of the connection between the current collector 120 and the activated carbon fiber 110 will be described later together with power supply units 140 and 150 to be described.

The power supply units 140 and 150 may include a power source 140 and a wire 150.

However, in the power source 140, a voltage may be applied within a range in which ion adsorption is possible, without decomposing the raw water. For example, the power source 140 may apply a voltage of 1.5V.

Meanwhile, the current collector 120 has a positive electrode or a negative electrode depending on the direction of a current flowing through the power supply unit 140 and 150.

For example, as illustrated in FIG. 3, when the current collector 120 disposed at the left side of the drawing is a positive electrode, the current collector 120 disposed at the right side of the drawing may be a negative electrode.

To the contrary, when the current collector 120 disposed at the left side of the drawing is a negative electrode, the current collector 120 disposed at the right side of the drawing may be a positive electrode.

As described above, current collectors 120 disposed on opposite sides of the activated carbon fiber layer 110 represent positive and negative electrodes, respectively, depending on the direction that the current flows.

Hereinafter, the current collector at which the positive electrode is formed is referred to as a positive electrode, and the current collector at which the negative electrode is formed is referred to as a negative electrode.

Adjacent activated carbon fiber layers of the plurality of activated carbon fiber layers 110, which are stacked, have to alternately have the positive electrode and the negative electrode. The meaning of "adjacent" refers to that the adjacent activated carbon fiber layers are close to each other while interposing a spacer 130 therebetween. In other words, the activated carbon fiber layer 110 disposed at the upper most part of the drawing may be adjacent to the second activated carbon fiber layer 110, which is positioned right thereunder, while interposing the spacer 130 therebetween.

In order for the adjacent activated carbon fiber layers 110 to alternately have the positive and negative electrodes, positive and negative electrodes have to be formed at the current collectors 120 disposed at opposite sides of the activated carbon fiber layer 110, and the adjacent activated carbon fiber layers 110 of the plurality of activated carbon fiber layers 110, which are stacked, has to be alternately connected with the positive electrode and the negative electrode, respectively.

For example, as illustrated in FIG. 3, when the positive electrode is formed at the left side of the drawing and the negative electrode is formed at the right side of the drawing, the first activated carbon fiber layer 110 disposed at the upper most part of the drawing may be connected with the positive electrode at the left side of the drawing and the second activated carbon fiber layer 110 disposed under the first activated carbon fiber layer 110 may be connected with the negative electrode at the right side of the drawing. In addition, the third activated carbon fiber layer 110 disposed under the second activated carbon fiber layer 110 may be connected with the positive electrode at the right side and the fourth activated carbon fiber layer 110 disposed under the third activated carbon fiber layer 110 may be connected with the negative electrode at the right side of the drawing.

In this case, the activated carbon fiber layer 110 connected with the positive electrode is electrically insulated from the negative electrode, and the activated carbon fiber layer 110 connected with the negative electrode is electrically insulated from the positive electrode.

In addition, even if the positive electrode is present at the left side of the drawing and the negative electrode is present at the right side of the drawing, the activated carbon fiber layer 110 disposed at the upper most part of the drawing may be connected with the negative electrode at the right side and the activated carbon fiber layer 110, which is disposed under the activated carbon fiber layer 110 disposed at the upper most part of the drawing, may be connected with the positive electrode at the left side.

As another example, when the negative electrode is present at the left side of the drawing and the positive electrode is present at the right side of the drawing, the activated carbon fiber layer 110 disposed at the upper most part of the drawing may be connected with the negative electrode at the left side and the activated carbon fiber layer 110 disposed, which is disposed under the activated carbon fiber layer 110 disposed at the upper most part of the drawing, may be connected with the positive electrode at the right side.

In addition, even if the negative electrode is present at the left side of the drawing and the positive electrode is present at the right side of the drawing, the activated carbon fiber layer 110 disposed at the upper most part of the drawing may be connected with the positive electrode at the right side and the activated carbon fiber layer 110, which is disposed under the activated carbon fiber layer 110 disposed at the upper most part of the drawing may be connected with the negative electrode at the left side.

In this case, the activated carbon fiber layer 110 connected with the positive electrode is electrically insulated from the negative electrode, and the activated carbon fiber layer 110 connected with the negative electrode is electrically insulated from the positive electrode.

For example, a negative electrode is spaced apart from the activated carbon fiber layer 110 connected with the positive electrode such that the activated carbon fiber layer 110 connected with the positive electrode is electrically insulated from the negative electrode. In addition, the positive electrode is spaced apart from the activated carbon fiber layer 110 connected with the negative electrode such that the positive electrode is electrically insulated from the activated carbon fiber layer 110 connected with the negative electrode.

Hereinafter, description will be made regarding the structure in which adjacent activated carbon fiber layers 110 of the plurality of activated carbon fiber layers 110 are alternately connected with the positive electrode and the negative electrode.

For example, when electrodes are formed at opposite end portions of the activated carbon fiber layer 110, the activated carbon fiber layer 110 disposed at the upper most part may have a connector protruding to one side from one end portion thereof, and the second activated carbon fiber layer 110 may have a connector protruding to an opposite side from an opposite end portion thereof. Hereinafter, an odd-numbered activated carbon fiber layer 110 may have a connector protruding to one side from one end portion thereof, and an even-numbered activated carbon fiber layer 110 may have a connector protruding to an opposite side from an opposite end portion thereof.

In this state, an electrode formed at the one side may be connected with the connector of the odd-numbered activated carbon fiber layer 110 protruding to the one side, and an electrode formed at the opposite side may be connected with the connector of the even-numbered activated carbon fiber layer 110 protruding from the opposite side.

In this case, the one side and the opposite side may refer to directions opposite to each other or may refer to directions perpendicular to each other.

As another example, when electrodes are formed in front of and back of one side of the activated carbon fiber layer 110, the first activated carbon fiber layer 110 disposed at the upper most part of the drawing may have a connector protruding to the one side from one-side front portion thereof and the second activated carbon fiber layer 110 formed under the first activated carbon fiber layer 110 may have a connector protruding to the one side from one-side rear portion thereof. Hereinafter, an odd-numbered activated carbon fiber layer 110 may have a connector protruding to one side from one-side front portion thereof, and an even-numbered activated carbon fiber layer 110 may have a connector protruding to one side from the one-side rear portion thereof.

In this state, the electrodes formed in front of the one side may be connected with all connectors of the odd-numbered activated carbon fiber layers 110, which protrudes to the one side from one-side front portion thereof, and the electrodes formed in back of the one side may be connected with all connectors of the even-numbered activated carbon fiber layer 110, which protrude to the one side from one-side rear portion thereof.

Besides, the structure in which the adjacent activated carbon fiber layers 110 of the plurality of activated carbon fiber layers 110, which are stacked, are alternately connected with the positive electrode and the negative electrode may bring various embodiments.

When the adjacent activated carbon fiber layers 110 of the plurality of activated carbon fiber layers 110 alternately have the positive electrode and the negative electrode, ions, such as heavy metals, contained in raw water passing between the activated carbon fiber layers 110 separated from each other by the spacer 130 may be adsorbed and removed.

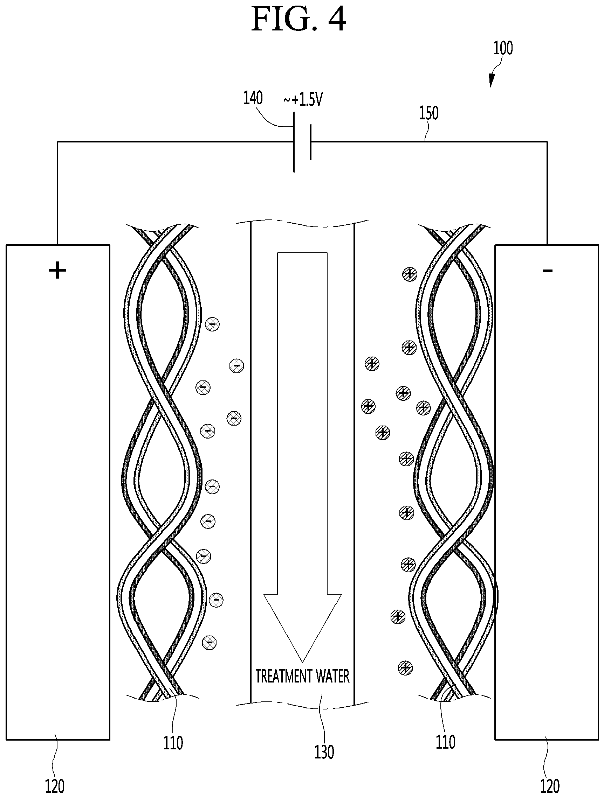

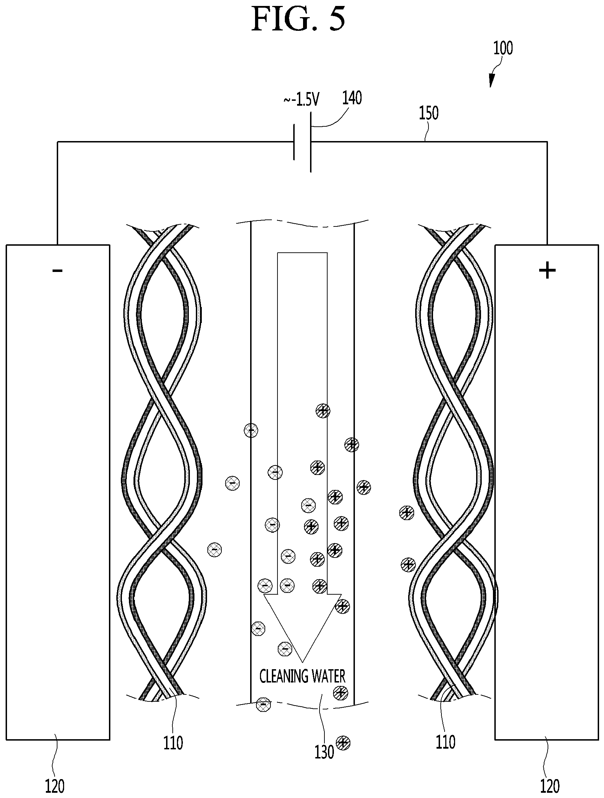

FIG. 4 is a schematic view illustrating that water is purified through the activated carbon fiber filter illustrated in FIG. 3, and FIG. 5 is a schematic view illustrating that the activated carbon fiber filter illustrated in FIG. 3 is cleaned.

First, referring to FIG. 4, when a positive electrode is formed at the current collector 120 disposed at the left side of the drawing and a negative electrode is formed at the current collector 120 disposed at the right side of the drawing, the activated carbon fiber layer 110 disposed at the left side of the drawing is positively charged, and the activated carbon fiber layer 110 disposed at the right side of the drawing is negatively charged. In this state, when the raw water is allowed to pass between the activated carbon fiber layers 110, the ions (-) contained in the raw water are adsorbed on the activated carbon fiber layer 110 at the left side positively charged, and the ions (+) contained in the raw water are adsorbed on the activated carbon fiber layer 110 at the right side negatively charged.

As the ions (-) and the ions (+) contained in the raw water are adsorbed and removed through the above process, the raw water may be purified.

To the contrary, when a positive electrode is formed at the current collector 120 disposed at the right side of the drawing and a negative electrode is formed at the current collector 120 disposed at the left side of the drawing, the activated carbon fiber layer 110 disposed at the right side of the drawing is positively charged, and the activated carbon fiber layer 110 disposed at the left side of the drawing is negatively charged. In this state, when the raw water is allowed to pass between the activated carbon fiber layers 110, the ions (-) contained in the raw water are adsorbed on the activated carbon fiber layer 110 at the right side positively charged, and the ions (+) contained in the raw water are adsorbed on the activated carbon fiber layer 110 at the left side negatively charged.

In this case, the raw water may easily pass between the activated carbon fiber layers 110 through the spacer 130, which has a permeable property, interposed between the activated carbon fiber layers 110, thereby preventing short-circuiting and securing the flow passage.

However, as the adsorption continues, when the number of ions adsorbed on the activated carbon fiber layer 110 increases, the activated carbon fiber layer 110 reaches a state in which the activated carbon fiber layer 110 does not adsorb ions any more. When the activated carbon fiber layer 110 reaches the state, it is necessary to separate the adsorbed ions from the activated carbon fiber layer 110 to regenerate the activated carbon fiber layer 110 as illustrated in FIG. 5.

To regenerate the activated carbon fiber layer 110 as described above, the supply of a current may be cut off, or a current may be allowed to flow in a direction opposite to the direction of a current applied when ions are adsorbed on the activated carbon fiber layer 110.

For example, as illustrated in FIG. 4, in the state that the ions (-) contained in the raw water are adsorbed on the activated carbon fiber layer 110 positively charged and disposed at the left side, and the ions (+) contained in the raw water are adsorbed on the activated carbon fiber layer 110 negatively charged and disposed on the right side, the activated carbon fiber layer 110 disposed at the left side of the drawing is negatively charged and the activated carbon fiber layer 110 disposed at the right side of the drawing is positively charged by changing the flow of current, thereby regenerating the activated carbon fiber layer 110.

Then, the ions (-) adsorbed on the activated carbon fiber layer 110 at the left side in the water purifying process are separated from the activated carbon fiber layer 110, which is negatively charged, at the left side. In addition, the ions (+) adsorbed on the activated carbon fiber layer 110, which is positively charged, at the right side in the water purifying process are separated from the activated carbon fiber layer 110 at the right side.

The ions (+) and the ions (-) separated from both activated carbon fiber layer 110 are discharged to the outside together with the cleaning water as described above.

When the ions adsorbed on the activated carbon fiber layer 110 are removed through the process of cleaning the activated carbon fiber layer 110, the ion removal capability of the activated carbon fiber filter 100 is regenerated, so the ion removal capability is uniformly maintained.

The activated carbon fiber filter unit 100a configured as described above may constitute, in the structure of a single body, the activated carbon fiber filter 100, or a plurality of activated carbon fiber filter units 100a may be provided and stacked in several layers to constitute the activated carbon fiber filter 100.

When the activated carbon fiber filter 100 described above is used, since underwater ions are quickly removed, the hardness of the water is lowered. Accordingly, water may be softened.

In addition, the ion exchange membrane, which is essentially provided to primarily remove the ions in a conventional technology, may be removed, thereby minimizing the volume of the current collector. Accordingly, the thickness of the electrode may be minimized. The stacking may is freely performed, so the stacking height may be variously set depending on the required treatment capacity and the required treatment speed

Although the above description has been made in that the ion exchange membrane is removed, the scope of the present invention is not limited thereto. If necessary, the ion exchange membrane may be selectively used to more increase the ion removal rate of the activated carbon fiber filter 100.

When the ion exchange membrane is used as described above, the ion exchange membrane may be disposed between the spacer 130 and the activated carbon fiber layer 110.

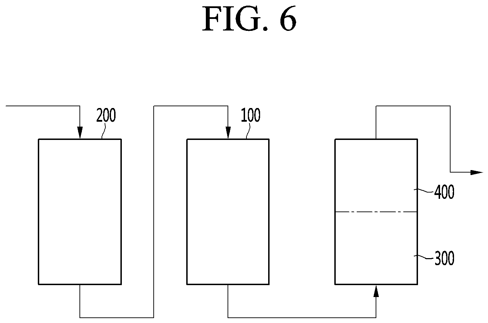

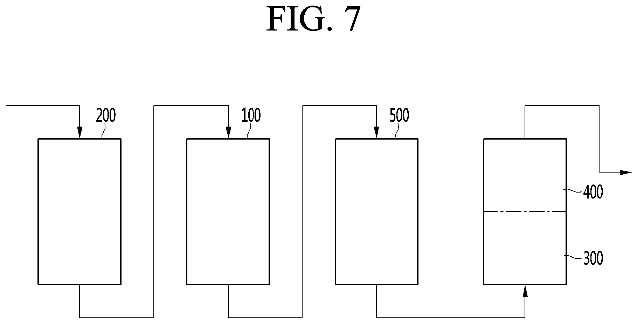

FIG. 6 is a schematic view illustrating a filter module of the water treatment apparatus. FIG. 7 is a schematic view illustrating a filter module of the water treatment apparatus according to the present invention.

Referring to FIGS. 6 to 7, the filter module may include a plurality of activated carbon fiber filters 100.

When a plurality of activated carbon fiber filters 100 and 500 are provided, raw water passes through the activated carbon fiber filters 100 and 500 several times. Accordingly, various ions contained in the raw water may be more adsorbed and removed on the activated carbon fiber layer 110.

Accordingly, the number of the activated carbon fiber filters 100 and 500 may be freely increased or decreased depending on the state of the raw water and required water purification performance.

The filter module may further include a pre-carbon block filter 200 which purifies water introduced from the outside and then supplies the water to the activated carbon fiber filter 100.

In other words, the raw water introduced from the outside may be preliminarily filtered while passing through the pre-carbon block filter 200 and then filtered while passing through the activated carbon fiber filter 100, before supplied to the activated carbon fiber filter 100.

When the pre-carbon block filter 200 is provided as described above, particulate matter and organic compounds contained in the raw water may be more reliably removed.

In addition, the water treatment apparatus filter may further include a post-carbon block filter 400 which receives, purifies, and then discharges water output through the activated carbon fiber filter 100.

In other words, the water output through the activated carbon fiber filter 100 may be additionally filtered while passing through the post-carbon block filter 400 without directly being supplied to a user, and then may be supplied to the user.

When the post-carbon block filter 400 is provided, foreign matters may be more removed, so the water taste may be improved.

In addition, the filter module may further include an UF membrane filter 300 which receives, purifies, and then discharges water output through the activated carbon fiber filter 100.

In other words, the water output through the activated carbon fiber filter 100 may be additionally filtered while passing through the UF membrane filter 300 without directly being supplied to a user, and then may be supplied to the user.

When the UF membrane filter 300 is provided as described above, viruses and bacteria in the water may be more reliably removed.

In the present invention, the water, which is output through the activated carbon fiber filter 100, is discharged after sequentially passing through the UF membrane filter 300 and the post-carbon block filter 400. The UF membrane filter 300 and the post-carbon block filter 400 may be arranged in a longitudinal direction and installed in one filter housing.

When the UF membrane filter 300 and the post-carbon block filter 400 are aligned in line with each other inside one filter housing, the filtering efficiency may be enhanced, and the flow rate may be maintained.

In addition, the present invention may be directly applied through simple work of replacing an existing filter with new one without expanding the filter installation space formed in the water treatment apparatus.

In addition, the volume of the filter may be reduced to increase the space utilization. Further, the slim water treatment apparatus may be realized.

Hereinafter, the procedure of purifying the raw water introduced from the outside by the filter module will be described according to two embodiments.

### <Embodiment 1 (not falling under the scope of the claims)>

Referring to FIG. 6, water for treatment, which is introduced from the outside, passes through the pre-carbon block filter 200. In this process, particulate matters and organic compounds contained in the treatment water are removed, and the treatment water is primarily purified. Thereafter, the treatment water subject to the primary purification passes through the activated carbon fiber filter 100. In this process, ions contained in the treatment water are adsorbed and removed on the activated carbon fiber filter 100, thereby performing secondary purification for the treatment water. Thereafter, the treatment water subject to the secondary purification passes through a high-specification UF membrane filter 300. In this process, the viruses and bacteria contained in the treated water are removed, thereby performing tertiary purification for the treated water. Thereafter, the treatment water subject to the tertiary purification passes through the post-carbon block filter 400. In this process, the foreign matters contained in the treatment water are further removed, thereby performing fifth purification for the treatment water.

As described above, the treatment water passes through the filter module including the pre-carbon block filter 200, the activated carbon fiber filter 100, the UF membrane filter 300, and the post-carbon block filter 400, thereby lowering the hardness in the water, more removing foreign matters including harmful underwater microorganism, and improving water taste.

### <Embodiment 2 (according to the present invention as claimed)>

Referring to FIG. 7, water for treatment, which is introduced from the outside, passes through the pre-carbon block filter 200. In this process, particulate matters and organic compounds contained in the treatment water are removed, and the treatment water is primarily purified. Thereafter, the treatment water subject to the primary purification passes through the activated carbon fiber filter 100. In this process, ions contained in the treatment water are adsorbed and removed on the activated carbon fiber filter 100, thereby performing secondary purification for the treatment water. Thereafter, the treatment water subject to the secondary purification passes through a second activated carbon fiber filter 500. In this process, ions contained in the treatment water are adsorbed and removed on the second activated carbon fiber filter 500, thereby performing tertiary purification for the treatment water. Thereafter, the treatment water subject to the tertiary purification passes through a high-specification UF membrane filter 300. In this process, the viruses and bacteria contained in the treated water are removed, thereby performing fourth purification for the treated water. Thereafter, the treatment water subject to the fourth purification passes through the post-carbon block filter 400. In this process, the foreign matters contained in the treatment water are further removed, thereby performing fifth purification for the treatment water.

As described above, the treatment water passes through the filter module including the pre-carbon block filter 200, the activated carbon fiber filter 100, the second activated carbon fiber filter 500, the UF membrane filter 300, and the post-carbon block filter 400, thereby lowering the hardness in the water, more removing foreign matters including harmful underwater microorganism, and improving water taste.

## Claims

1. A water treatment apparatus (10) comprising:
a plurality of panels (11, 12, 13) combined with each other to form an outer appearance of the water treatment apparatus (10); and
a filter module to remove a foreign matter from raw water that is introduced, wherein the filter module comprises:
an activated carbon fiber filter (100) including one activated carbon fiber filter unit (100a) or including a plurality of activated carbon fiber filter units (100a) which are stacked;
a second activated carbon fiber filter (500) configured to receive the water output through the activated carbon fiber filter (100);
a pre-carbon block filter (200) configured to purify water introduced from an outside and to then supply the water to the activated carbon fiber filter (100);
a UF membrane filter (300) configured to receive the water output through the second activated carbon fiber filter (500), to purify, and to then discharge the water; and
a post-carbon block filter (400) configured to receive the water output through the UF membrane filter (300), to purify, and to then discharge the water;
wherein each of the activated carbon fiber filters (100, 500) includes:
a plurality of activated carbon fiber layers (110) including activated carbon fiber and stacked in parallel to each other;
a plurality of spacers (130) interposed between the activated carbon fiber layers (110) to prevent short;
a pair of current collectors (120) disposed on opposite sides of the stack of activated carbon fiber layers (110), respectively, and wherein one of the current collectors (120) is connected to one end portion of an activated carbon fiber layer (110) of the stack of activated carbon fiber layers (110) and another of the current collectors (120) is connected to an opposite end portion of an adjacent activated carbon fiber layer (110) of the stack of activated carbon fiber layers (110) such that adjacent activated carbon fiber layers (110) alternately form positive and negative electrodes, respectively; and
a power supply unit (140, 150) to apply, through the current collector (120), a current to the activated carbon fiber layer (110) forming the positive electrode and the negative electrode.

2. The water treatment apparatus (10) of claim 1, wherein the activated carbon fiber layer (110) is provided in a form of a fabric having flexibility.

3. The water treatment apparatus (10) of claim 1, wherein the power supply unit (140, 150) is configured to apply the current in one direction when treatment water is supplied to the activated carbon fiber filters (100, 500) for allowing the ion to be adsorbed on the activated carbon fiber layer (110) to remove the underwater ion.

4. The water treatment apparatus (10) of claim 3, wherein the power supply unit (140, 150) is configured to apply the current in an opposite direction to the one direction, when the treatment water is supplied to the activated carbon fiber filters (100, 500), for discharging the ion, which is adsorbed on the activated carbon layer (110), under water to clean the activated carbon fiber layer (110).

5. The water treatment apparatus (10) of claim 1,
wherein the UF membrane filter (300) and the post-carbon block filter (400) are arranged in a longitudinal direction and provided in one filter housing.

6. The water treatment apparatus (10) of any one of claims 1 to 5, wherein a water supply line, through which purified water output through the filter module flows, is split into a plurality of water supply lines (L1, L2, L3).

7. The water treatment apparatus (10) of claim 6, wherein the water supply line, through which the purified water output through the filter module flows, is split into a hot water supply line (L1) and a cold water supply line (L3).

8. The water treatment apparatus (10) of claim 7, wherein each of the water supply lines (L1, L2, L3) is provided thereon with a valve (64, 65, 66) to control flow of water.

9. The water treatment apparatus (10) of claim 7, wherein cold water, hot water, or purified water flowing through the respective water supply lines (L1, L2, L3) is supplied to an outside of a water purifier through one outlet.

10. The water treatment apparatus (10) of claim 7, wherein a hot-water heater (30) is provided on the hot water supply line (L1) to heat the purified water, and wherein a cold water generating unit (20) is provided on the cold water supply line (L3) to cool the purified water.

## Patentansprüche

1. Wasserbehandlungsvorrichtung (10), die Folgendes umfasst:
mehrere Platten (11, 12, 13), die miteinander kombiniert sind, um ein äußeres Erscheinungsbild der Wasserbehandlungsvorrichtung (10) zu bilden; und
ein Filtermodul zum Entfernen von Fremdstoffen aus Brauchwasser, das eingeleitet wird, wobei das Filtermodul Folgendes umfasst:
einen Filter (100) mit Aktivkohlenstofffasern, der eine Filtereinheit mit Aktivkohlenstofffasern (100a) aufweist, oder der mehrere Filtereinheiten (100a) mit Aktivkohlenstofffasern, die gestapelt sind, aufweist;
einen zweiten Filter (500) mit Aktivkohlenstofffasern, der konfiguriert ist, das Wasser aufzunehmen, das durch den Filter (100) mit Aktivkohlenstofffasern ausgegeben wird;
einen Filter (200) vor dem Kohlenstoffblock, der konfiguriert ist, Wasser, das von außen eingeleitet wird, zu reinigen und das Wasser dann dem Filter (100) mit Aktivkohlenstofffasern zuzuführen;
einen UF-Membranfilter (300), der konfiguriert ist, das Wasser aufzunehmen, das durch den zweiten Filter (500) mit Aktivkohlenstofffasern ausgegeben wird, um das Wasser zu reinigen und dann abzuführen; und
einen Filter (400) nach dem Kohlenstoffblock, der konfiguriert ist, das Wasser aufzunehmen, das durch den UF-Membranfilter (300) ausgegeben wird, um das Wasser zu reinigen und dann abzuführen;
wobei jeder der Filter (100, 500) mit Aktivkohlenstofffasern Folgendes umfasst:
mehrere Lagen (110) mit Aktivkohlenstofffasern, die Aktivkohlenstofffasern umfassen und parallel zueinander gestapelt sind;
mehrere Abstandselemente (130), die zwischen den Lagen (110) mit Aktivkohlenstofffasern angeordnet sind, um einen Kurzschluss zu verhindern;
ein Paar Stromabnehmer (120), die jeweils auf entgegengesetzten Seiten des Stapels der Lagen (110) mit Aktivkohlenstofffasern angeordnet sind, wobei einer der Stromabnehmer (120) mit einem Endabschnitt einer Lage (110) mit Aktivkohlenstofffasern des Stapels der Lagen (110) mit Aktivkohlenstofffasern verbunden ist und der andere der Stromabnehmer (120) mit einem entgegengesetzten Endabschnitt einer angrenzenden Lage (110) mit Aktivkohlenstofffasern des Stapels der Lagen (110) mit Aktivkohlenstofffasern verbunden ist, so dass aneinander angrenzende Lagen (110) mit Aktivkohlenstofffasern abwechselnd jeweils eine positive und eine negative Elektrode bilden; und
ein Netzteil (140, 150), um durch den Stromabnehmer (120) einen Strom zur Lage (110) mit Aktivkohlenstofffasern, die die positive Elektrode und die negative Elektrode bildet, zu schicken.

2. Wasserbehandlungsvorrichtung (10) nach Anspruch 1, wobei die Lage (110) mit Aktivkohlenstofffasern in Form eines Gewebes bereitgestellt wird, das biegsam ist.

3. Wasserbehandlungsvorrichtung (10) nach Anspruch 1, wobei das Netzteil (140, 150) konfiguriert ist, den Strom in einer Richtung zu schicken, wenn den Filtern (100, 500) mit Aktivkohlenstofffasern zu behandelndes Wasser zugeführt wird, damit Ionen an der Lage (110) mit Aktivkohlenstofffasern adsorbiert werden können, um die Ionen unter Wasser zu entfernen.

4. Wasserbehandlungsvorrichtung (10) nach Anspruch 3, wobei das Netzteil (140, 150) konfiguriert ist, den Strom in einer zu der einen Richtung entgegengesetzten Richtung zu schicken, wenn das zu behandelnde Wasser den Filtern (100, 500) mit Aktivkohlenstofffasern zum Entladen der Ionen unter Wasser zugeführt wird, die an der Lage (110) mit Aktivkohlenstofffasern adsorbiert sind, um die Lage (110) mit Aktivkohlenstofffasern zu reinigen.

5. Wasserbehandlungsvorrichtung (10) nach Anspruch 1,
wobei der UF-Membranfilter (300) und der Filter (400) nach dem Kohlenstoffblock in Längsrichtung angeordnet sind und in einem Filtergehäuse vorgesehen sind.

6. Wasserbehandlungsvorrichtung (10) nach einem der Ansprüche 1 bis 5, wobei eine Wasserzufuhrleitung, durch die gereinigtes Wasser strömt, das durch das Filtermodul ausgegeben wird, in mehrere Wasserzufuhrleitungen (L1, L2, L3) aufgespaltet wird.

7. Wasserbehandlungsvorrichtung (10) nach Anspruch 6, wobei die Wasserzufuhrleitung, durch die das gereinigte Wasser strömt, das durch das Filtermodul ausgegeben wird, in eine Warmwasser-Zufuhrleitung (L1) und eine Kaltwasser-Zufuhrleitung (L3) aufgespaltet wird.

8. Wasserbehandlungsvorrichtung (10) nach Anspruch 7, wobei jede der Wasserzufuhrleitungen (L1, L2, L3) mit einem Ventil (64, 65, 66) zum Steuern einer Strömung von Wasser versehen ist.

9. Wasserbehandlungsvorrichtung (10) nach Anspruch 7, wobei kaltes Wasser, warmes Wasser oder gereinigtes Wasser, das durch die jeweilige Wasserzufuhrleitung (L1, L2, L3) strömt, der Außenseite einer Wasserreinigungsvorrichtung durch einen Auslass zugeführt wird.

10. Wasserbehandlungsvorrichtung (10) nach Anspruch 7, wobei eine Warmwasser-Heizvorrichtung (30) an der Warmwasser-Zufuhrleitung (L1) vorgesehen ist, um das gereinigte Wasser zu heizen, und wobei eine Kaltwasser-Erzeugungseinheit (20) an der Kaltwasser-Zufuhrleitung (L3) vorgesehen ist, um das gereinigte Wasser zu kühlen.

## Revendications

1. Appareil de traitement d'eau (10) comportant :
une pluralité de panneaux (11, 12, 13) combinés les uns avec les autres pour former un aspect extérieur de l'appareil de traitement d'eau (10) ; et
un module filtrant pour retirer des corps étrangers de l'eau brute qui est introduite, dans lequel le module filtrant comporte :
un filtre à fibres de carbone activé (100) incluant une unité filtrante à fibres de carbone activé (100a) ou incluant une pluralité d'unités filtrantes à fibres de carbone activé (100a) qui sont empilées ;
un second filtre à fibres de carbone activé (500) configuré pour recevoir la sortie d'eau à travers le filtre à fibres de carbone activé (100) ;
un pré-filtre à plaquette de carbone (200) configuré pour purifier l'eau introduite depuis un extérieur et ensuite fournir l'eau au filtre à fibres de carbone activé (100) ;
un filtre à membrane UF (300) configuré pour recevoir la sortie d'eau à travers le second filtre à fibres de carbone activé (500), purifier puis évacuer l'eau ; et
un post-filtre à plaquette de carbone (400) configuré pour recevoir la sortie d'eau à travers le filtre à membrane UF (300), purifier puis évacuer l'eau ;
dans lequel chacun des filtres à fibres de carbone activé (100, 500) inclut :
une pluralité de couches de fibres de carbone activé (110) incluant des fibres de carbone activé et empilées parallèlement les unes aux autres ;
une pluralité d'éléments d'espacement (130) intercalés entre les couches de fibres de carbone activé (110) pour empêcher un court-circuit ;
une paire de collecteurs de courant (120) disposés sur des côtés opposés de la pile de couches de fibres de carbone activé (110), respectivement, et dans lequel l'un des collecteurs de courant (120) est relié à une partie d'extrémité d'une couche de fibres de carbone activé (110) de la pile de couches de fibres de carbone activé (110) et un autre des collecteurs de courant (120) est relié à une partie d'extrémité opposée d'une couche adjacente de fibres de carbone activé (110) de la pile de couches de fibres de carbone activé (110) de telle sorte que des couches adjacentes de fibres de carbone activé (110) forment de manière alternée des électrodes positive et négative, respectivement ; et
une unité d'alimentation (140, 150) pour appliquer, via le collecteur de courant (120), un courant à la couche de fibres de carbone activé (110) formant l'électrode positive et l'électrode négative.

2. Appareil de traitement d'eau (10) selon la revendication 1, dans lequel la couche de fibres de carbone activé (110) est fournie sous forme de tissu ayant de la souplesse.

3. Appareil de traitement d'eau (10) selon la revendication 1, dans lequel l'unité d'alimentation (140, 150) est configurée pour appliquer le courant dans une première direction lorsque de l'eau de traitement est fournie aux filtres à fibres de carbone activé (100, 500) pour permettre d'adsorber les ions sur la couche de fibres de carbone activé (110) pour retirer les ions sous l'eau.

4. Appareil de traitement d'eau (10) selon la revendication 3, dans lequel l'unité d'alimentation (140, 150) est configurée pour appliquer le courant dans une direction opposée à la première direction, lorsque l'eau de traitement est fournie aux filtres à fibres de carbone activé (100, 500), pour décharger les ions, qui sont adsorbés sur la couche de fibres de carbone activé (110), sous l'eau pour nettoyer la couches de fibres de carbone activé (110).

5. Appareil de traitement d'eau (10) selon la revendication 1,
dans lequel le filtre à membrane UF (300) et le post-filtre à plaquette de carbone (400) sont agencés dans une direction longitudinale et fournis dans un boîtier de filtre.

6. Appareil de traitement d'eau (10) selon l'une quelconque des revendications 1 à 5, dans lequel une ligne d'alimentation en eau, par laquelle s'écoule la sortie d'eau purifiée à travers le module filtrant, est divisée en une pluralité de lignes d'alimentation en eau (L1, L2, L3).

7. Appareil de traitement d'eau (10) selon la revendication 6, dans lequel la ligne d'alimentation en eau, par laquelle s'écoule la sortie d'eau purifiée à travers le module filtrant, est divisée en une ligne d'alimentation en eau chaude (L1) et une ligne d'alimentation en eau froide (L3).

8. Appareil de traitement d'eau (10) selon la revendication 7, dans lequel chacune des lignes d'alimentation en eau (L1, L2, L3) est pourvue sur celle-ci d'une vanne (64, 65, 66) pour commander un écoulement d'eau.

9. Appareil de traitement d'eau (10) selon la revendication 7, dans lequel de l'eau froide, de l'eau chaude ou de l'eau purifiée s'écoulant à travers les lignes d'alimentation en eau (L1, L2, L3) respectives est fournie à un extérieur du purificateur d'eau à travers une sortie.

10. Appareil de traitement d'eau (10) selon la revendication 7, dans lequel un élément de chauffage d'eau chaude (30) est agencé sur la ligne d'alimentation en eau chaude (L1) pour chauffer l'eau purifiée, et dans lequel une unité de production d'eau froide (20) est agencée sur la ligne d'alimentation en eau froide (L3) pour refroidir l'eau purifiée.
